# EUROPEAN PATENT APPLICATION

(11) **EP 1 052 566 A1**
(43) Date of publication of application: **15.11.2000**
(21) Application number: 99440112.3
(22) Date of filing: 14.05.1999
(51) Int. Cl.: G06F 3/033

(54) **Graphical user interface**

(71) Applicant: ALCATEL, 75008 Paris (FR)
(72) Inventor: Ferveur, Christian, 67400 Illkirch (FR); Fischer, Bertrand, 67115 Plobsheim (FR)
(74) Representative: van Bommel, Jan Peter

(57) **Abstract**

In terminals having a display and a processor system with a graphical interface for allowing a user to access one out of a number applications and/or commands, this number is getting larger and larger. To allow said user to be able to control this large number, said graphical interface should be in the form of a 3-dimensional object to be shown on said display and having several faces for allowing access to several applications and/or commands, whereby said 3-dimensional object should be rotatable in two different directions for allowing at least one of said faces to be shown to said user. Said 3-dimensional object should be larger when used and smaller when not used, preferaby in dependence of a display-location, and should be designed for a window environment.

## Description

The invention relates to a telecommunication system comprising a display and a processor system being provided with a processor, a memory and a graphical interface for allowing a user to access applications and/or commands, which graphical interface is substantially in the form of a 3-dimensional object to be shown on said display and having several faces for allowing access to several applications and/or commands.

Such a telecommunication system is known in the form of a personal computer (pc) comprising a computer game which has a control menu in the form of a wheel that can be turned to the left and to the right and that has faces on its surface showing "start game", "load game", "end game" etc. This known graphical interface is a more sophisticated alternative to the well-known ALT TAB function for switching between applications like windows.

Such a telecommunication system is disadvantageous, inter alia, due to recent telecommunication systems in the form of telecommunication terminals comprising a large number of applications and/or commands making it very difficult to a user to select quickly one of said large number of applications and/or commands.

It is an object of the invention, inter alia, to provide a telecommunication system as described in the preamble, which allows a user to more quickly select one out of a large number of applications and/or commands.

Thereto, the telecommunication system according to the invention is characterised in that said 3-dimensional object is rotatable in at least two different directions for allowing at least one of said faces to be shown to said user.

By allowing the 3-dimensional object to be rotatable in at least two different directions, it can be in the form of a cubic or a pyramid, for example, thereby allowing a large number of faces to be quickly selectable by a user.

The invention is based on the insight, inter alia, that when displays get smaller and/or the number of applications and/or commands increases, information should also be put in a third dimension, in addition to the first and second dimension, to allow a maximum number being accessable.

The invention solves the problem, inter alia, of giving a user access to a large number of applications and/or commands in a very user-friendly way.

A first embodiment of the telecommunication system according to the invention is characterised in that at least one dimension of said 3-dimensional object can be increased and/or decreased.

By increasing at least a part of said 3-dimensional object, for example after activation of it, and decreasing at least a part of said 3-dimensional object, for example after deactivation of it, the user-friendlyness is increased.

A second embodiment of the telecommunication system according to the invention is characterised in that said increasing and/or decreasing is display-location dependent.

By introducing a display-location dependency, for example after activation said 3-dimensional object could be moved automatically or by a user to the centre of the display and enlarged, and for example after deactivation said 3-dimensional object could be moved automatically or by a user to a corner of the display and made smaller.

A third embodiment of the system according to the invention is characterised in that said processor system is adapted for a window environment.

In this case said 3-dimensional object could be either shown in each window or in one window only or in some windows, and at least a part of the applications to be accessed via said 3-dimensional object could correspond to one or more windows.

A fourth embodiment of the system according the invention is characterised in that said memory comprises first signals for displaying said 3-dimensional object on said display and comprises second signals for activation of said applications and/or commands corresponding with said faces of said object, and in that said processor is adapted for, in response to control signals originating from said user, processing said first and second signals for rotating said 3-dimensional object in at least two directions for allowing at least one of said faces to be shown to said user for said activation.

In this case first signals are used for displaying purposes and second signals are used for activation purposes, whereby some couplings and/or relationships could exist between said first and second signals.

A fifth embodiment of the system according the invention is characterised in that said first signals comprise at least dimension signals, of which at least one dimension signal can be increased and/or decreased.

In this case dimension signals are used for increasing and/or decreasing purposes.

A sixth embodiment of the system according the invention is characterised in that said first signals comprise at least display-location signals, with said increasing and/or decreasing of at least one dimension signal being dependent upon at least one display-location signal.

In this case display-location signals are used for introducing said display-location dependency.

A seventh embodiment of the system according the invention is characterised in that said memory comprises window signals for a window environment.

In this case window signals are used for creating a window environment, whereby some couplings and/or relationships could exist between said window signals and said first and/or second signals.

The invention further relates to a processor system comprising a processor, a memory and a graphical interface for allowing a user to access applications and/or commands, which graphical interface is substantially in the form of a 3-dimensional object to be shown on said display and having several faces for allowing access to several applications and/or commands.

The processor system according to the invention is characterised in that said 3-dimensional object is rotatable in at least two different directions for allowing at least one of said faces to be shown to said user.

The invention yet further relates to a graphical interface for allowing a user to access applications and/or commands, which graphical interface is substantially in the form of a 3-dimensional object to be shown on a display and having several faces for allowing access to several applications and/or commands.

The graphical interface according to the invention is characterised in that said object is rotatable in at least two different directions for allowing at least one of said faces to be shown to said user.

The document EP 352741 discloses a 3-dimensional graphical interface having several colors, it does not disclose the telecommunication system according to the invention. All references including further references cited with respect to and/or inside said references are considered to be incorporated in this patent application.

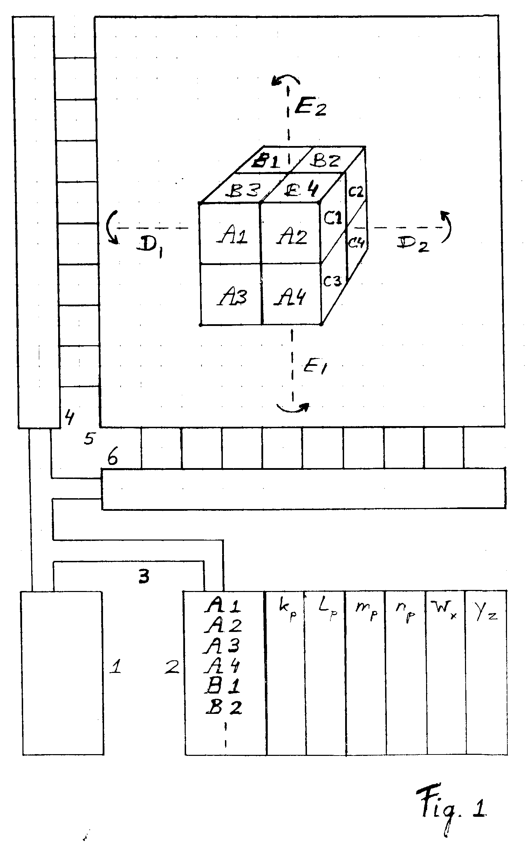

The invention will be further explained at the hand of an embodiment described with respect to a drawing, whereby
figure 1 discloses a processor system according to the invention and a display showing a graphical interface according to the invention.

The processor system according to the invention shown in figure 1 comprises a processor 1, a memory 2, a bus 3, a display 5 coupled to a first driver 4 and to a second driver 6, whereby processor 1, memory 2, driver 4 and driver 6 are coupled via said bus 3.

Display 5 shows a graphical interface according to the invention being formed by a cubic having six sides or main-faces of which main-faces A, B and C are shown, each side comprising 4 faces (A: A1,A2,A3,A4; B: B1,B2,B3,B4; C: C1,C2,C3,C4), which cubic can be rotated via horizontal axis D (D1: towards a user, D2: from a user) and via vertical axis E (E1: to the right, E2: to the left).

Memory 2 is in the form of a table memory comprising at least 7 columns, the first column for storing face-indication signals (A1,A2,A3,A4,B1,B2 etc.), the second column for storing display-location signals (Kp: indicating one point of a face, for example the centre or one of the corners of said face), the third column for storing first direction signals (Lp: indicating a first side of a face by an angle, for example face A1 having a first side at zero degrees), the fourth column for storing second indication signals (Mp: indicating a second side of a face by an angle, for example face A1 having a second side at ninety degrees), the fifth column for storing dimension signals (Np: indicating a dimension of a face, for example the length of the side of a face), the sixth column for storing window signals (Wx: indicating in which window(s) the graphical interface is shown) and the seventh column for storing application/command signals (Yz: indicating which application (like for example text processing or presentation-sheet processing) and/or command (in text processing for example an overwrite function or store-text function or load-text function) can be activated by the corresponding face).

The processor system according to the invention comprising the graphical interface according to the invention functions as follows. The processor system comprises a software program that runs in processor 1 at the hand of the data in memory 2 whereby said data is exchanged via bus 3. This results in processor 1 sending information via bus 3 to drivers 4 and 6, which drive display 5 in such a way that said cubic is displayed.

According to a first embodiment, a user would like to activate an application shown/defined by face A1. To do this, said user moves his cursor (for example via mouse or keyboard or touch screen) to face A1 and clicks on the mouse or presses 'RETURN' or 'ENTER' on his keyboard or presses on the touch screen. Then location-information from said cursor and present in processor 1 is compared with the content of memory 2 via bus 3, for example by calculating at the hand of the signals stored in each row in the second, third, fourth and fifth column whether a location as defined by said location-information is situated inside or outside each face, resulting in finding face A1 to be the one selected by said user. Then processor 1 searches for the application and/or command corresponding to face A1, for example by reading the content in the seventh column of the row corresponding with face A1, and this application and/or command is activated.

According to a second embodiment, a user would like to activate an application not shown and defined by face F1. To do this, said user moves his cursor (for example via mouse or keyboard) to at least one of said axis D1, D2, E1 and E2, and clicks on the mouse or presses 'RETURN' or 'ENTER' on his keyboard. Then location-information from said cursor and present in processor 1 is recognised as an instruction to rotate said cubic, and said software program that runs in processor 1 at the hand of the old data in memory 2 calculates new data replacing said old data. This results in processor 1 sending information via bus 3 to drivers 4 and 6, which drive display 5 in such a way that said cubic is now displayed in a rotated way, thereby showing face F1. Then said user moves his cursor (for example via mouse or keyboard) to said face F1, and clicks on the mouse or presses 'RETURN' or 'ENTER' on his keyboard. Then location-information from said cursor and present in processor 1 is compared with the content of memory 2 via bus 3, for example by calculating at the hand of the signals stored in each row in the second, third, fourth and fifth column whether a location as defined by said location-information is situated inside or outside each face, resulting in finding face F1 to be the one selected by said user. Then processor 1 searches for the application and/or command corresponding to face F1, for example by reading the content in the seventh column of the row corresponding with face F1, and this application and/or command is activated.

According to a third embodiment, a user would like to activate an application shown/defined by face B1 or C1. Then there are two possibilities. Either this is allowed by said processor system, in which case the procedure belonging to embodiment 1 is followed, or this is not allowed by said processor system, in which case the procedure belonging to embodiment 2 is followed. The fact that this activation is allowed or not can easily be defined by for example the content of the third and fourth columns: only faces A1, A2, A3 and A4 will show an angle of zero degrees and an angle of ninety degrees, faces B1, B2, B3 and B4 will show angles of for example zero degrees and fortyfive degrees, and faces C1, C2, C3 and C4 will show angles of for example fortyfive degrees and ninety degrees. In view of this information, said software program can be designed to be able to decide what is allowed or not.

According to a fourth embodiment, a user would like to move said cubic towards for example the right upper corner of display 5. To do this, said user moves his cursor (for example via the mouse) to for example the common point of faces A1, A2, A3 and A4, and clicks on the mouse and keeps it in clicked position. Then location-information from said cursor and present in processor 1 is recognised as an instruction to move said cubic, and said software program that runs in processor 1 at the hand of the old data in memory 2 calculates new data replacing said old data. This results in processor 1 sending information via bus 3 to drivers 4 and 6, which drive display 5 in such a way that said cubic is now displayed in the right upper corner of display 5. According to an alternative, said software program is such that a double click is sufficient to automatically move said cubic to said corner and (after an other double click) back, whereby different locations are predefined and adaptable by said user.

According to a fifth embodiment, in addition to said fourth embodiment, when said software program that runs in processor 1 at the hand of the old data in memory 2 calculates new data replacing said old data, the content of the fifth column is changed also, in such a way that dimension signals are made smaller when said cubic is moved towards said corner and are made bigger when said cubic is moved towards the centre of display 5. According to an alternative, said software program is such that a double click is sufficient to automatically move said cubic to said corner and (-after an other double click) back, whereby different locations and/or different sizes are predefined and adaptable by said user.

According to a sixth embodiment, in a window environment, it is defined per window which faces can be activated or not, whether or not per window said graphical interface is shown, and where per window said graphical interface has its locations with respect to activated and deactivated situations, whereby the sixth column could be used (possibly together with other columns) of memory 2 to indicate this. Further, by adding one or more rows to the row that corresponds with a face, different graphical interfaces can be shown in different windows, for example a cubic in a first window and a pyramid in a second window.

Everything described before could be made dependent upon a user-identification (by password, smart card, fingerprint, voice detection etc.) to introduce more user-friendlyness by allowing several users to have their own preferences, and/or could be made dynamically by detecting what a user or users are doing and in dependence of that adjusting signals automatically, for example by showing a cubic to a user in such a way that the faces that have been activated more often than others can be activated without the need to rotate, whereby said other faces can only be activated after rotation.

As described before, said graphical interface could have several forms (cubic, pyramid etc.), and could even have a different form per window, whereby it should not be excluded that a user will get the possibility to create an individual graphical interface. Such a graphical interface could be controlled by mouse, keyboard, scrolling keys, touch screen or even voice.

All embodiments are just embodiments and do not exclude other embodiments not shown and/or described. For example, memory 2 could be an other memory differing from said table memory and for example based on addresses, and instead of the described low level implementation a higher level implementation belongs to the possibilities, without departing from the general inventive concept that said graphical interface is substantially in the form of a 3-dimensional object to be shown on a display and having several faces for allowing a user access to several applications and/or commands, whereby said 3-dimensional object is rotatable in at least two different directions for allowing at least one of said faces to be shown to said user.

## Claims

1. Telecommunication system comprising a display and a processor system being provided with a processor, a memory and a graphical interface for allowing a user to access applications and/or commands, which graphical interface is substantially in the form of a 3-dimensional object to be shown on said display and having several faces for allowing access to several applications and/or commands, characterised in that said 3-dimensional object is rotatable in at least two different directions for allowing at least one of said faces to be shown to said user.

2. Telecommunication system according to claim 1, characterised in that at least one dimension of said 3-dimensional object can be increased and/or decreased.

3. Telecommunication system according to claim 2, characterised in that said increasing and/or decreasing is display-location dependent.

4. Telecommunication system according to claims 1, 2 or 3, characterised in that said processor system is adapted for a window environment.

5. Telecommunication system according to claims 1, characterised in that said memory comprises first signals for displaying said 3-dimensional object on said display and comprises second signals for activation of said applications and/or commands corresponding with said faces of said object, and in that said processor is adapted for, in response to control signals originating from said user, processing said first and second signals for rotating said 3-dimensional object in at least two directions for allowing at least one of said faces to be shown to said user for said activation.

6. Telecommunication system according to claim 5, characterised in that said first signals comprise at least dimension signals, of which at least one dimension signal can be increased and/or decreased.

7. Telecommunication system according to claim 6, characterised in that said first signals comprise at least display-location signals, with said increasing and/or decreasing of at least one dimension signal being dependent upon at least one display-location signal.

8. Telecommunication system according to claims 5, 6 or 7, characterised in that said memory comprises window signals for a window environment.

9. Processor system comprising a processor, a memory and a graphical interface for allowing a user to access applications and/or commands, which graphical interface is substantially in the form of a 3-dimensional object to be shown on said display and having several faces for allowing access to several applications and/or commands, characterised in that said 3-dimensional object is rotatable in at least two different directions for allowing at least one of said faces to be shown to said user.

10. Graphical interface for allowing a user to access applications and/or commands, which graphical interface is substantially in the form of a 3-dimensional object to be shown on a display and having several faces for allowing access to several applications and/or commands, characterised in that said object is rotatable in at least two different directions for allowing at least one of said faces to be shown to said user.
